# EUROPEAN PATENT APPLICATION

(11) **EP 1 647 317 A1**
(43) Date of publication of application: **19.04.2006**
(21) Application number: 05102733.2
(22) Date of filing: 07.04.2005
(51) Int. Cl.: A63H 17/36

(54) **Toy vehicle**

(30) Priority: 13.10.2004 JP 2004299032
(71) Applicant: Tomy Company, Ltd, Tokyo 124-8511 (JP)
(72) Inventor: Suimon, Yoshio c/o Suitech Corporation, 160-0004, Shinjuku-ku (JP); Nakayama, Kenji, 124-8511, Katsushika-ku (JP)
(74) Representative: Bailey, David Martin

(57) **Abstract**

A running toy having: a direct current motor for steering which is remote controlled; and a steering arm to change a direction of a wheel, the steering arm being operated from side to side with respect to a vehicle body by a power of the direct current motor for steering, wherein a rack tooth is formed on the steering arm, the direct current motor for steering is allowed to perform a normal rotation and a reverse rotation, and a pinion gear which meshes the rack tooth is attached to a shaft of the direct current motor for steering via a centrifugal clutch.

## Description

### BACKGROUND OF THE INVENTION

### Field of the Invention

The present invention relates to a running toy comprising a steering mechanism which is easy to assemble and causes a little power transmission loss.

### Description of the Related Art

Conventionally, as a steering mechanism of a running toy, there has been known one in which a power of a direct current motor for steering is transmitted through a clutch mechanism, motor pinion gears, crown gears, idle gears, sector wheels, an operation rod, and an operation member to actuate a steering arm from side to side with respect to a vehicle body (for example, refer to JP-Jitsukaihei-1-159893).

However, in the above conventional technique, the structure is such that the motor power is transmitted to the steering arm through many elements. Thus, there have been problems such as that the assembly of the elements is complicated and the power transmission loss is large.

### SUMMARY OF THE INVENTION

The present invention has been achieved to solve the problem, and an object of the present invention is to provide a running toy comprising a steering mechanism which is easy to assemble and causes a little power transmission loss.

In accordance with the first aspect of the present invention, the running toy comprises:
a direct current motor for steering which is remote controlled; and
a steering arm to change a direction of a wheel, the steering arm being operated from side to side with respect to a vehicle body by a power of the direct current motor for steering,
wherein a rack tooth is formed on the steering arm, the direct current motor for steering is allowed to perform a normal rotation and a reverse rotation, and a pinion gear which meshes the rack tooth is attached to a shaft of the direct current motor for steering via a centrifugal clutch.

Accordingly, since the power of the DC motor for steering is transmitted via the clutch mechanism and the pinion and rack mechanism, the number of the elements can be reduced in comparison with the above conventional technique. Consequently, the assembly of the elements becomes extremely easy. Moreover, the power transmission loss can be reduced by the reduced number of the elements, enabling to perform steering with low power.

Preferably, the wheel and the direct current motor for steering are provided at a position in front of a position of the steering arm in the vehicle body.

Accordingly, since the steering wheel and the DC motor for steering are provided at a position in front of a position of the steering arm of the vehicle body, grounding property of the steering wheel can be improved by the weight of the DC motor for steering, enabling to stably perform steering.

Preferably, a spring to return the steering arm to a neutral position in a lateral direction of the vehicle body in a state where the direct current motor for steering is not operated, is provided.

Accordingly, since the steering arm is returned to a neutral position in the lateral direction of the vehicle body in the state where the DC motor for steering is not operated, the running toy can go straight ahead, or turn right or left depending upon the operating state of the DC motor for steering.

### BRIEF DESCRIPTION OF THE DRAWINGS

The present invention will become more fully understood from the detailed description given hereinafter and the accompanying drawings which are given by way of illustration only, and thus are not intended as a definition of the limits of the present invention, and wherein;
FIG. 1 is a plan view showing a straight ahead state of a running toy according to the embodiment of the present invention;
FIG. 2 is a plan view showing a left turn state of the running toy according to the embodiment of the present invention;
FIG. 3 is a plan view showing a state where steering wheels of the running toy according to the embodiment of the present invention were moved forward and adjusted;
FIG. 4 is a broken perspective view of a front wheel support mechanism to support a left front wheel;
FIG. 5 is a front view of the running toy;
FIG. 6 is a plan view of a main portion showing an engagement state of a suspension member and a wheel support;
FIG. 7 is an explanation view showing a position adjustment of the suspension member;
FIGS. 8A and 8B are explanation views showing a direct current motor for steering and a clutch mechanism;
FIG. 9 is a perspective view showing a direct current motor for running and a running mechanism:

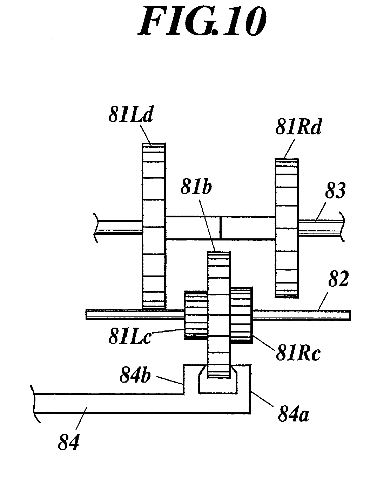

FIG. 10 is a plan view showing the running mechanism;
FIG. 11 is a circuit diagram showing a drive circuit; and
FIG. 12 is a circuit diagram showing a power switch.

### DETAILED DESCRIPTION OF THE PREFERRED EMBODIMENTS

### (Whole Structure of the Embodiment of the Present Invention)

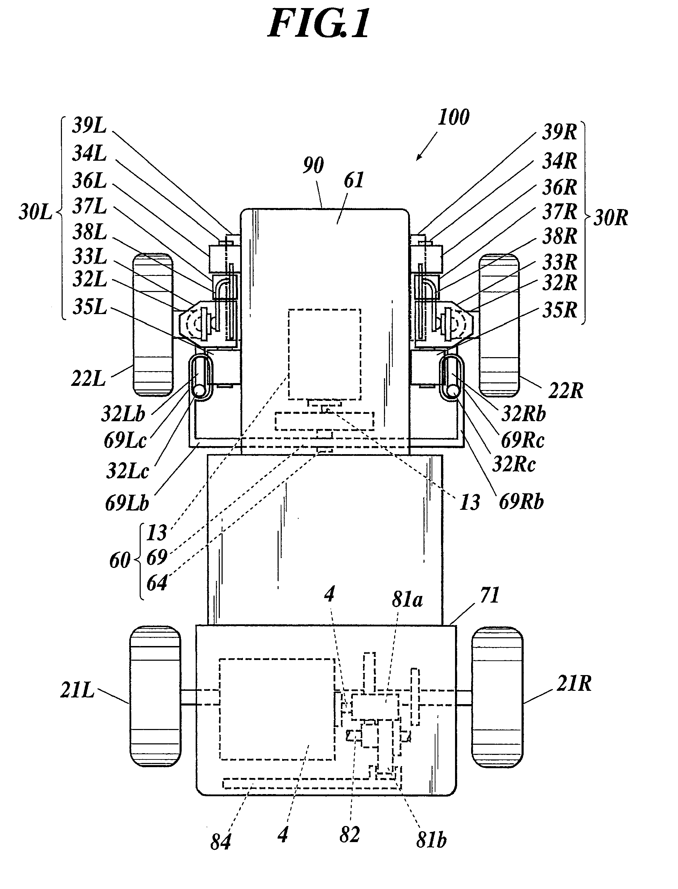

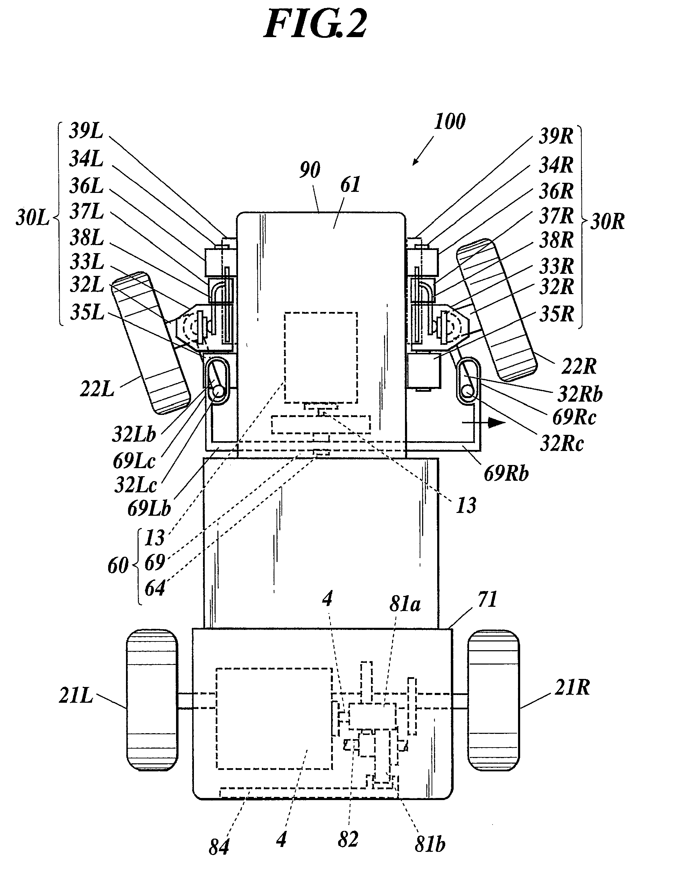

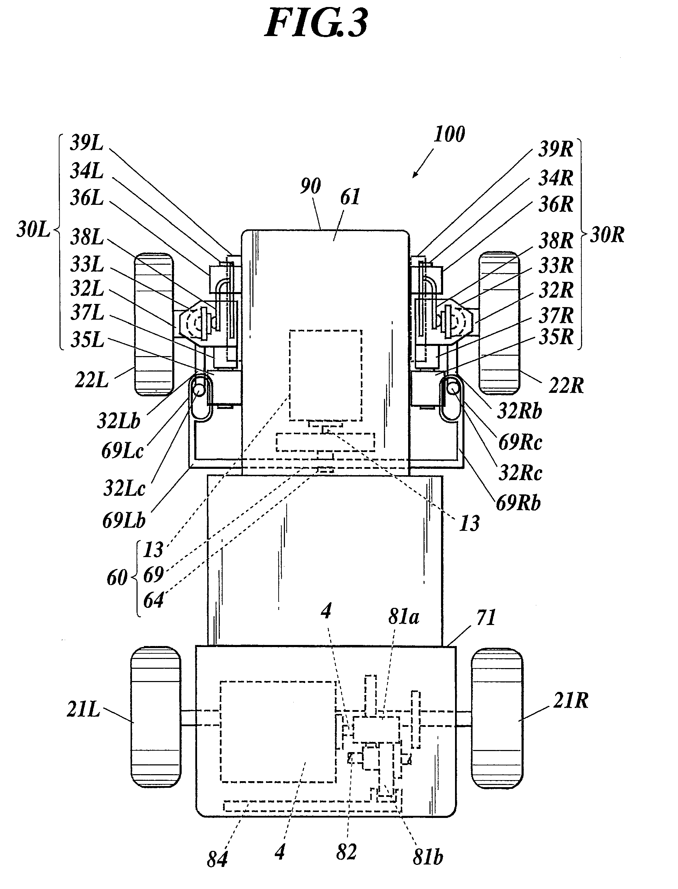

FIGS. 1 to 3 are plan views of a running toy 100 of the embodiment of the present invention, wherein FIG. 1 shows a straight ahead state, FIG. 2 shows a left turn state, and FIG. 3 shows a state where steering wheels are moved forward and adjusted. In the explanation below, a back and forth direction of the running toy to go straight ahead is defined as a Y axis direction, a right and left direction is defined as an X axis direction, and a vertical direction is defined as a Z axis direction. These are at right angles with one another.

As shown in FIGS. 1 to 3, the running toy 100 comprises right and left rear wheels 21R, 21L as a drive wheel, right and left front wheels 22R, 22L as a steering wheel, front wheel support mechanisms 30R, 30L to support the front wheels 22R, 22L, respectively, a steering mechanism 60 to perform steering of each of the front wheels 22R, 22L, a running mechanism 80 to give running torque to each of the rear wheels 21R, 21L, a motor drive circuit to drive a direct current motor for running 4 as a drive source of the running mechanism 80 and a direct current motor for steering 13 as a drive source of the steering mechanism 60, a control circuit of the motor drive circuit, and a vehicle body 90 to store and hold each of the above components.

### (Front Wheel Support Mechanism)

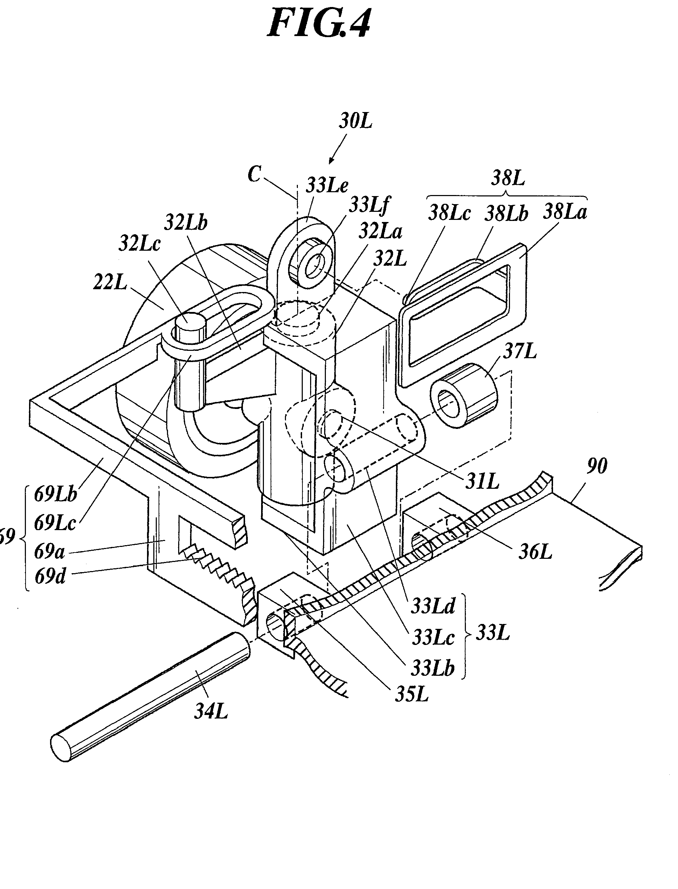

FIG. 4 is a broken perspective view of the front wheel support mechanism 30L to support the left front wheel 22L. The front wheel support mechanism 30L will be explained based on FIGS. 1 to 4. The front wheel support mechanism 30R of the right front wheel 22R is arranged to have mirror symmetry of the front wheel support mechanism 30L with respect to a Y-Z plane, so that the explanation thereof is omitted here. Each structure of the front wheel support mechanism 30R corresponding to that of the front wheel support mechanism 30L to be explained below is appropriately described by changing "L" of the reference numeral of each structure of the front wheel support mechanism 30L to "R". The front wheel support mechanisms 30R, 30L are provided at the right and left side surfaces of the vehicle body 90, respectively.

The front wheel support mechanism 30L comprises a steering rotating body 32L to rotatably support the front wheel 22L through a rotary shaft 31L, a wheel support 33L to rotatably support the steering rotating body 32L around a direction perpendicular to the rotary shaft 31L as a center, rotation support portions 35L, 36L to pivotally support the wheel support 33L by a support shaft 34L at the lower portion of the left side surface of the vehicle body 90, a spacer 37L to hold the wheel support 33L to a predetermined position along the support shaft 34L, a suspension member 38L as a buffer to absorb vibration to the vehicle body 90 from the front wheel 22L, and a suspension holding portion 39L to hold the suspension member 38L at the vehicle body 90 side.

The above front wheel 22L is rotatable around the rotary shaft 31L positioned at the center thereof, and the rotary shaft 31L is held by the steering rotating body 32L.

The steering rotating body 32L has an approximately cylindrical shape, and holds the rotary shaft 31L to be perpendicular to a center line C direction (vertical direction in FIG. 4) at the middle in the center line C direction of the cylinder. A round shaped projection 32La projecting along the center line C direction is formed on each of the both end portions of the steering rotating body 32L in the center line C direction (the projection at the lower side is not shown), and the steering rotating body 32L is supported by the wheel support 33L via the round shaped projections 32La. Each projection 32La has a round shape, so that the steering rotating body 32L can rotate around the center line C direction as a center with respect to the wheel support 33L.

Further, the steering rotating body 32L comprises a driven arm portion 32Lb which extends in a radial direction of the cylinder at the upper end portion thereof. A round bar like engaging protrusion 32Lc is provided to be fixed at the tip portion of the driven arm portion 32Lb to be parallel to the center line C direction. The engaging protrusion 32Lc is pressed by a steering arm 69 of the steering mechanism 60 to be described later in either direction along the X axis direction when steering. Thereby, the steering rotating body 32L is rotated with respect to the wheel support 33L, and the running direction of the front wheel 22L is changed, so that the steering of the running toy 100 is performed. The steering arm 69 is adapted to perform steering of the right and left steering rotating bodies 32R, 32L at the same time in the same direction with the same displacement.

The steering arm 69 of the steering mechanism 60 will be explained beforehand. The steering arm 69 comprises a slide flat portion 69a which is supported by a guide groove (not shown) provided in the vehicle body 90 to perform a reciprocating movement along the X axis direction, driving arms 69Rb, 69Lb each of which extends in a longitudinal direction from one of the both ends of the slide flat portion 69a in the longitudinal direction and bends perpendicularly in the middle, and ring-shaped portions 69Rc, 69Lc each having a long hole provided at the tip portion of each of the driving arms 69Rb, 69Lb.

The slide flat portion 69a has a long plate-like shape, and is supported by the not shown guide groove of the vehicle body 90 to be slidably movable in the X axis direction in a state where the flat plate surface thereof is parallel to the X-Z plane.

The slide flat portion 69a is provided with a long hole in the middle of the flat plate surface along the longitudinal direction, and a rack tooth 69d is formed along the longitudinal direction at the edge of the lower side of the long hole. The rack tooth 69d meshes a pinion gear 64 driven to rotate by the DC motor for steering 13 through a clutch mechanism 63, so that the steering arm 69 is moved in either direction along the X axis direction by converting motor torque to the power to move forward.

Each of the driving arms 69Rb, 69Lb is provided to extend in the longitudinal direction from one of the both end portions of the slide flat portion 69a, and bends in the middle in a direction perpendicular to the longitudinal direction. The bending direction is a direction which is perpendicular to the flat plate surface of the slide flat portion 69a. That is, when the slide flat portion 69a of the steering arm 69 is supported by the vehicle body 90 in a state to be along the X-Z plane, each of the driving arms 69Rb, 69Lb becomes a state where the tip portion thereof is along the Y axis direction.

Each of the ring-shaped portions 69Rc, 69Lc has a long hole along the tip portion of each of the driving arms 69Rb, 69Lb. That is, when the slide flat portion 69a of the steering arm 69 is supported by the vehicle body 90 in a state to be along the X-Z plane, each long hole of the ring-shaped portions 69Rc, 69Lc becomes a state where the tip portion thereof is along the Y axis direction. Each of the engaging protrusions 32Rc, 32Lc of the steering rotating bodies 32R, 32L is inserted into the long hole of each of the ring-shaped portions 69Rc, 69Lc. Each of the engaging protrusions 32Rc, 32Lc may incline in the X axis direction (to be described later), so that the width of the long hole of each of the ring-shaped portions 69Rc, 69Lc in the short axis direction is set to be slightly larger than the diameter of the engaging protrusions 32Rc, 32Lc. The positions of the front wheels 22R, 22L, and the steering rotating bodies 32R, 32L can be adjusted along the Y axis direction together with the wheel supports 33R, 33L (to be described later), so that the length of the long hole of each of the ring-shaped portions 69Rc, 69Lc in the long axis direction is set so that the amount of the position adjustment in the Y axis direction can be covered (refer to FIG. 3).

FIG. 2 shows a state where steering is performed by the steering arm 69. The steering arm 69 is moved in either direction in the X axis direction by the DC motor for steering 13, thus the steering rotating bodies 32R, 32L are rotated via the driven arm portions 32Rb, 32Lb from the driving arms 69Rb, 69Lb, respectively, thereby steering the front wheels 22R, 22L in the same direction. For example, when the steering arm 69 is moved to right, the front wheel 22R, 22L are steered to turn left, and when the steering arm 69 is moved to left, the front wheels 22R, 22L are steered to turn right.

A return spring (not shown) to return to the straight ahead position to direct the front wheels 22R, 22L to the straight ahead direction, and a control knob (not shown) to control the straight ahead position returned by the return spring are both provided at the steering arm 69 in the vehicle body. Thus, when the steering control to the DC motor for steering 13 is released, it is possible to automatically return to the straight ahead running state.

Next, the wheel support 33L will be explained. The wheel support 33L supports the steering rotating body 32L to be rotatable around the center line C direction as a center. The wheel support 33L comprises a top plate 33La and a bottom plate 33Lb facing the both end portions of the steering rotating body 32L in the C direction, and a long back plate 33Lc connecting the top plate 33La and the bottom plate 33Lb, which are integrally formed to have an approximately C shape as a whole. That is, the top plate 33La and the bottom plate 33Lb are provided to extend in the same direction which is perpendicular to the back plate 33Lc. Each of the top plate 33La and the bottom plate 33Lb is provided with a receiving hole (not shown) to receive the projection 32La provided on each of the both ends of the steering rotating body 32L, so that the wheel support 33L supports the steering rotating body 32L to be rotatable.

There is provided an engaging hole 33Ld into which the support shaft 34L is inserted along a direction parallel to the flat plate surface thereof and perpendicular to the longitudinal direction, at the middle position in the longitudinal direction of the surface of the back plate 33Lc which is opposite side of the top plate 33La and the bottom plate 33Lb. That is, the wheel support 33L, the steering rotating body 32L and the front wheel 22L can rotate around the support shaft 34L which is inserted into the engaging hole 33Ld as a center with respect to the vehicle body 90.

Both end portions of the support shaft 34L are held by the two rotation support portions 35L, 36L which are fixed to be arranged in parallel along the Y axis direction with a predetermined space therebetween, at the lower portion of the left side surface. Accordingly, the wheel support 33L is arranged along the Y axis direction and is supported by the support shaft 34 to be rotatable around this direction as a center with respect to the vehicle body 90.

The space between the two rotation support portions 35L, 36L is set to be larger than the width of the wheel support 33L in the Y axis direction, and the cylindrical spacer 37L is inserted in the clearance.

FIG. 1 shows a state where the spacer 37L is arranged on the front side of the wheel support 33L, and FIG. 3 shows a state where the spacer 37L is arranged on the back side of the wheel support 33L.

The support shaft 34L functions as a guide to move the wheel support 33L along the Y axis direction, so that the position adjustment of the wheel support 33L in the Y axis direction can be made.

The spacer 37L can selectively be arranged on either the front side or the back side of the wheel support 33L to function as a holding section to hold the wheel support 33L at the adjustment position in the Y axis direction. That is, by changing the arrangement of the spacer 37L, the position of the wheel support 33L in the Y axis direction can be adjusted within the range between the rotation support portions 35L, 36L.

As above, the arrangement of each of the wheel supports 33R, 33L can be changed, so that even if wheel base is different when attaching various types of vehicle body covers with various designs to the vehicle body 90, the arrangement of front wheels 22R, 22L can be appropriately adjusted.

With regard to the spacer 37L, in addition to changing the arrangement thereof, a plurality of the spacers with different thickness may be prepared to adjust the position of the wheel supports 33R, 33L and the front wheels 22R, 22L in the Y axis direction by arranging the spacers on back and front sides of the wheel supports 33R, 33L, or laminating and arranging a plurality of thinner spacers on back and front sides of the wheel supports 33R, 33L.

The peripheries of the engaging hole 33Ld of the wheel support 33L and the hole in the spacer 37L are continuously connected, however, a part of the periphery of the hole may be cut to have a C shape in cross section, and the wheel support 33L and the spacer 37L may be made of material with flexibility. Thus, the wheel support 33L and the spacer 37L can be easily attach to the support shaft 34L which has already been attached to the rotation support portions 35L, 36L by pressing the C shaped cut portion therein.

A facing plate 33Le is integrally provided to stand on the upper surface of the top plate 33La of the wheel support 33L to be parallel to the flat plate surface of the back plate 33Lc. The facing plate 33Le is adapted to receive an elastic force in the reacting direction with respect to the vehicle body 90 from the suspension member 38L supported on the left side surface of the vehicle body 90. On the facing plate 33Le, a recess portion 33Lf with round shape to freely engage the semispherical projecting portion 38Lc provided on the suspension member 38L is formed on the facing surface of the vehicle body 90 side.

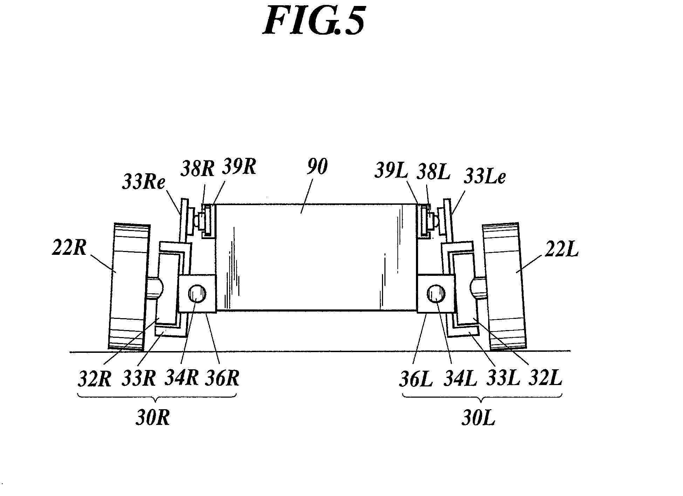

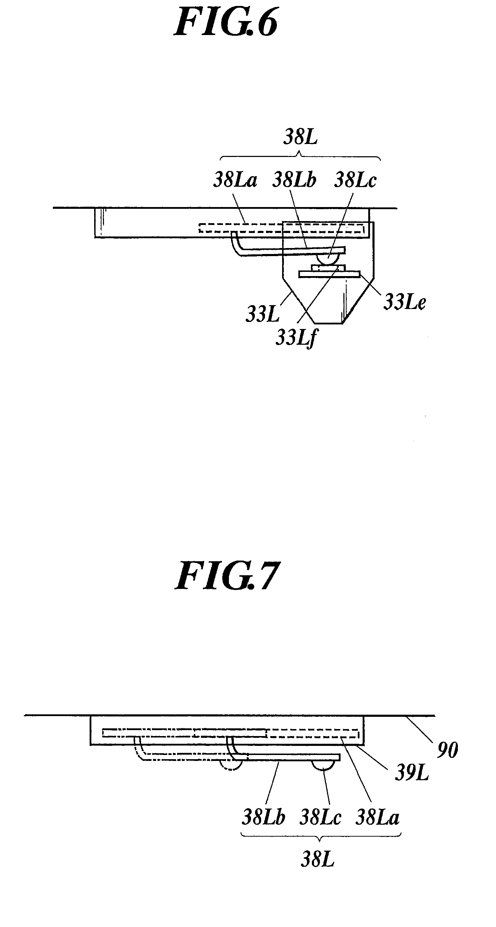

FIG. 5 is a front view of the running toy 100, and FIGS. 6 and 7 are plan views of a main portion of the suspension member 38L.

The suspension member 38L comprises a rectangular plate like base portion 38La supported by the suspension holding portion 39L, a plate spring 38Lb which is made of elastic material and extends along the Y axis direction from the base portion 38La in a cantilevered state, and the semispherical projecting portion 38Lc provided at the extending tip portion side of the plate spring 38Lb. The suspension member 38L gives the elastic force to the wheel support 33L in a state where the projecting portion 38Lc of the suspension member 38L engages the round shaped recess portion 33Lf provided at the facing plate 33Le.

As shown in FIG. 5, when each of the front wheels 22R, 22L contacts the ground, the upper portions of the wheel supports 33R, 33L rotate in a direction to come close to the side surface of the vehicle body 90 around the support shafts 34R, 34L as a center by the weight of the running toy 100, respectively, because the front wheels 22R, 22L are positioned on the outer side of the support shafts 34R, 34L in the width direction of the vehicle body 90 (X axis direction), respectively.

Thus, the front wheels 22R, 22L, and the wheel supports 33R, 33L become the state of inclining to be a truncated chevron shaped when viewed from the front. Therefore, the facing plates 33Re, 33Le provided on the upper side of the wheel supports 33R, 33L move to a direction to come close to the side surface of the vehicle body 90. However, since the suspension members 38R, 38L which cause a reaction force in a direction to separate from the side surfaces are provided on the side surfaces of the vehicle body 90, the wheel supports 33R, 33L are pushed back by the elastic force of the suspension members 38R, 38L through the facing plates 33Re, 33Le. Thereby, the vibration which the front wheels 22R, 22L receives from the ground can be reduced by the suspension members 38R, 38L to obtain buffer effect while maintaining a state where the right and left front wheels 22R, 22L are inclined to each other to be the truncated chevron shaped.

The front wheels 22R, 22L as a steering wheel maintain the inclined state to widen downward, so that the straight ahead steering state can be maintained when an external force is not given (steering operation by the steering mechanism 60 is not performed).

As described above, the position adjustment of the wheel supports 33R, 33L can be performed in the back and forth direction with respect to the vehicle body 90. Therefore, the position adjustment of the suspension members 38R, 38L also need to be performed in the back and forth direction with respect to the vehicle body 90. Accordingly, as shown in FIGS. 5 and 7, the suspension holding portion 39L (same in the 39R) supports the long base portion of the suspension member 38L to be slidable along the Y axis direction. Thereby, the suspension member 38L is moved to be adjusted in the same way as the recess portion 33Lf provided in the facing plate 33Le of the wheel support 33L which was moved in the Y axis direction and adjusted, and the projecting portion 38Lc thereof can engage the recess portion 33Lf. Thus, even when the position adjustment of the front wheels 22R, 22L in the back and forth direction was performed, it is possible to maintain a certain buffer effect.

As described above, in the front wheel support mechanisms 30R, 30L, the suspension members 38R, 38L are provided on the side surface sides of the vehicle body 90 to face the facing plates 33Re, 33Le provided on the upper portion of the wheel supports 33R, 33L, respectively. Thus, the elastic reaction force acts in the state where the front wheels 22R, 22L, and the wheel supports 33R, 33L that are pivotally supported around the Y axis direction as a center are inclined to widen downward to be a truncated chevron shaped, so that vibration or impact to the vehicle body 90 caused due to the road surface condition can be reduced.

In the front wheel support mechanisms 30R, 30L, the wheel support 33R, 33L are pivotally supported by the support shafts 34R, 34L and are slidable with respect to the support shafts 34R, 34L, respectively, so that the positions of the wheel supports 33R, 33L are decided by the spacers 37R and 37L. Thus, the adjustment of the wheel base can be performed only by a minor change of a part of the structure, which is different from the structure to extend or shorten the whole vehicle body. Accordingly, the structure of adjustment can be simple, and the adjustment work can be performed easily and in a shorter time.

Further, the structure is such that the adjustment of the wheel supports 33R, 33L in the back and forth direction is performed by separating them from the vehicle body, and also they are members mainly for supporting only the front wheels 22R, 22L, and the steering rotating bodies 32R, 32L, so that the size thereof can be small, and there is no need to consider the arrangements of various components stored in the vehicle body and impairing the function thereof as a conventional one when moving and adjusting the wheel supports 33R, 33L, enabling to adjust the wheel base with simple structure.

Since reduction in size and weight of the wheel supports 33R, 33L is easy, distortion due to the lack of strength is hard to occur, thus favorable running condition can be maintained.

Further, such as the ring-shaped portions 69Rc, 69Lc comprising the long hole, the steering arm 69 of the steering mechanism 60 comprises the structure in which locomotive faculty can be transmitted in the right and left direction even if change of the positions of the steering rotating bodies 32R, 32L in the back and forth direction occur, so that the position adjustment of the front wheels 22R, 22L in the back and forth direction is not interrupted, and steering can be stably performed.

The suspension members 38R, 38L are supported by the suspension holding portions 39R, 39L to be movable in the back and forth direction to adjust the positions, so that the elastic force can be given to the direction to separate from the vehicle body 90 even when the change of the positions of the wheel supports 33R, 33L in the back and forth direction occurs. Thus, stable buffer effect can be obtained irrespective of the adjustment of the position of the front wheels 22R, 22L in the back and forth direction.

Further, even when the front wheels 22R, 22L are moved and adjusted, it can easily be dealt with only by the sliding operation without a need to do complicated reassembling work of the suspension members 38R, 38L, enabling to perform the work easily and in a shorter time.

### (Modified Example of Front Wheel Support Mechanism)

In the above steering mechanism 60, the structure is such that the rack tooth is formed on the steering arm 69, and the steering arm 69 is moved in the X axis direction by the pinion gear 64 which is driven to rotate by the DC motor for steering 13, however, it is not limited thereto. Any method to give locomotive faculty to the steering arm 69 when necessary may be applied. For example, a structure in which an electromagnet and a magnetic material or a permanent magnet are used such as a solenoid or a linear motor, or a structure in which an arm is provided on an output shaft of a rotary motor in the radial direction and the steering arm 69 is moved from side to side by the rotation of the arm may be applied.

The engagement of the steering arm 69 and the steering rotating bodies 32R, 32L is made by coupling the ring-shaped portions 69Rc, 69Lc each having the long hole and the engaging protrusions 32Rc, 32Lc, however, any structure may be applied as long as they move in conjunction with each other in the X axis direction while allowing the relative movement occurring between them in the Y axis direction. For example, the long hole and the round bar like protrusion may be provided in the opposite side each other, or a groove may be used instead of the long hole. A slider to move along the extending direction of the driving arm or the driven arm may be provided to one of them, and the other thereof may be connected to the slider to be rotatable around the Z axis direction as a center.

The front wheel support mechanisms 30L, 30R are not limited to the above structure, and any structure in which movement to adjust in the Y axis direction is possible while allowing the rotation needed for steering the front wheels 22R, 22L may be applied. For example, the rotation support portions 35L, 36L may be provided to be movable along the Y axis direction with respect to the vehicle body 90 to make the wheel support 33L movable along the Y axis direction together with the support shaft 34L. The rotation support portions 35L, 36L may have a relief structure such as a boss and a fitting hole to be attachable to or detachable from the vehicle body 90, and the position adjustment of the rotation support portions 35L, 36L may be performed by providing a plurality of recess portions or projecting portions on the side surface side of vehicle body along the Y axis direction. Moreover, at least two or more C rings may be coaxially fixed to the wheel support 33L, the support shaft 34L having a diameter larger than that of the C ring may be provided on the rotation support portions 35L, 36L, and a plurality of circumferential grooves to rotatably attach the C ring along the longitudinal direction of the support shaft 34L may be formed on the outer periphery of the support shaft 34L. In this case, by selecting the circumferential grooves for the C rings and attaching the wheel support 33L, the position adjustment of the wheel support 33L in the Y axis direction can be achieved.

The same thing can be applied to the front wheel support mechanism 30R.

Although the suspension members 38R, 38L of the front wheel support mechanisms 30R, 30L can be moved and adjusted in the Y axis direction by the suspension holding portions 39R, 39L, any structure to elastically give buffer effect to the front wheels 22R, 22L irrespective of the change of position even when the position adjustment of the front wheels 22R, 22L in the back and forth direction was performed may be applied.

For example, the suspension member may be a long elastic body fixed to the vehicle body 90 along the Y axis direction.

Further, a plurality of the suspension members may be fixed to the vehicle body 90 along the Y axis direction.

Further, the suspension member made of an elastic body contacting the side surface of the vehicle body 90 may be provided on each of the facing plates 33Le and 33Re of the wheel supports 33R, 33L.

In these cases, when the position adjustment of the front wheels 22R and 22L in the back and forth direction is performed, there is no need to do the position adjustment of the suspension members. The elastic force is given to the wheel supports 33R, 33L from the suspension members, so that buffer effect to the front wheel 22R, 22L can be maintained. In these cases, the suspension holding portions 39R, 39L can be eliminated.

### (Steering Mechanism)

The vehicle body 90 comprises a motor and mechanism storing portion 61 in which a motor and mechanism storing room is provided. The DC motor for steering 13 is provided in the motor and mechanism storing room. A cover to cover the upper side of the motor and mechanism storing room is detachably attached to the vehicle body 90. The motor storing room and the mechanism storing room may be divided, and separate covers may be provided to cover the motor storing room and the mechanism storing room.

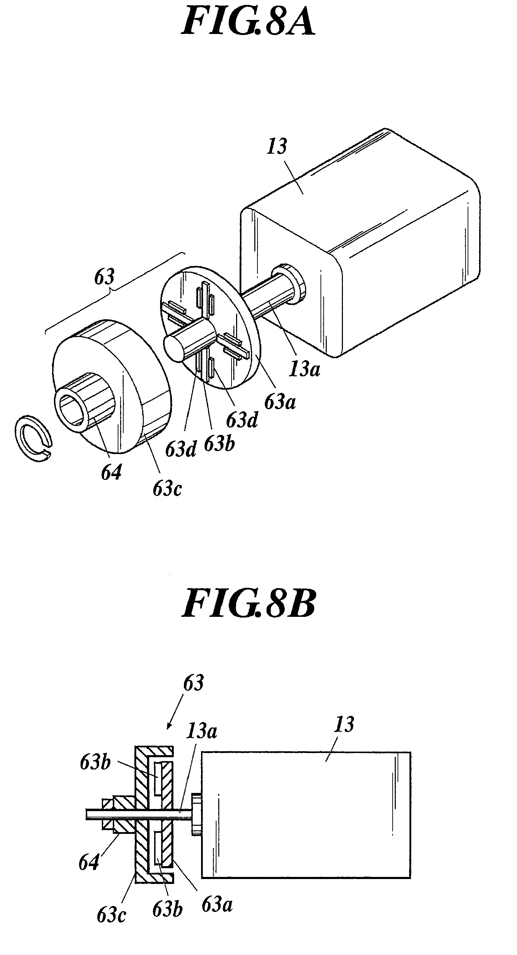

As the DC motor for steering 13, a motor which can perform normal rotation and reverse rotation (normal and reverse rotations) can be used. The DC motor for steering 13 is mounted in the motor and mechanism storing room so that a shaft 13a thereof projects backward of the vehicle body 90 from the motor case. As shown in FIGS. 8A and 8B, the shaft 13a is provided with the gear (pinion gear) 64 through the clutch mechanism 63. The clutch mechanism 63 comprises a disk (holding plate) 63a, clutch pieces 63b and an external cylinder 63c. That is, the disk 63a is fixed to the shaft 13a. The shape of this disk 63a is not specifically limited to the disk shape. The plurality of the clutch pieces 63b are provided on the end surface of the disk 63a. Each clutch piece 63b is attached to the disk 63a to be movable in the radial direction of the shaft 13a. That is, guides 63d approximately radially extending from the rotation center of the disk 63a are formed on the disk 63a, and each clutch piece 63b is movable in the radial direction of the shaft 13a along the guides 63d. Each guide 63d is formed so that at least the outer end side thereof is formed to have a bar shape. When the disk 63a rotates, each clutch piece 63b is adapted to move outward in the radial direction of the shaft 13a by a centrifugal force acting thereto.

On the other hand, the external cylinder 63c has a peripheral wall to surround the disk 63a and the guides 63d from the outside in the radial direction of the shaft 13a. When the disk 63a is rotated by the power of the DC motor for steering 13, each clutch piece 63b is moved outward in the radial direction of the shaft 13a by the centrifugal force acting on thereon. Thus, each clutch piece 63b is pressed to the inner surface of the peripheral wall of the external cylinder 63c, so that the disk 63a and the external cylinder 63c integrally rotate. In the state where the disk 63a is not rotated, the external cylinder 63c can rotate freely with respect to the disk 63a.

The pinion gear 64 meshes the rack tooth 69d formed on the steering arm 69. Consequently, when the pinion gear 64 is rotated in the normal or the reverse direction by the power of the DC motor for steering 13, the steering arm 69 moves from side to side corresponding to the rotation direction thereof.

### (Direct Current Motor for Running)

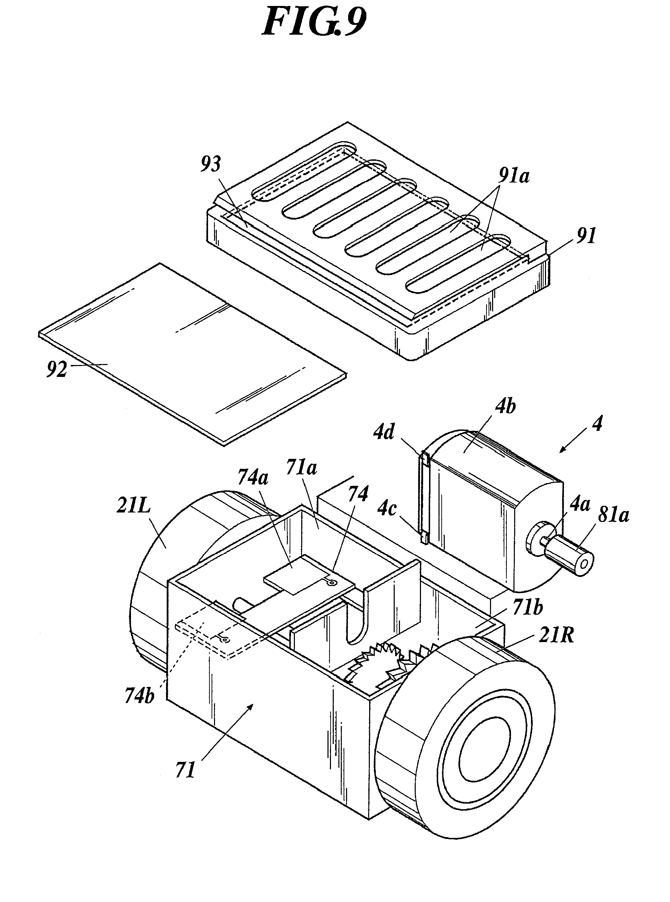

Provided at the rear portion of the vehicle body 90 is a motor and mechanism storing portion 71, the inside of which is divided into a motor storing room 71a and a mechanism storing room 71b as shown in FIG. 9.

As the DC motor for running 4, a motor which can perform normal rotation and reverse rotation (normal and reverse rotations) can be used. The DC motor for running 4 is mounted in the motor storing room 71a so that a shaft 4a thereof projects toward the width direction of the vehicle body 90 from a motor case 4b. The shaft 4a is provided with a gear (pinion gear) 81a. The gear 81a is provided at the position to be in the mechanism storing room 71b when the main body of the DC motor for running 4 is mounted in the motor storing room 71a. Two terminals 4c, 4d are provided on the outer periphery of the motor case 4b of the DC motor for running 4.

The floor of the motor storing room 71a is formed with a printed wiring board 74. Electrode patterns 74a, 74b are formed on the surface of the printed wiring board 74 to correspond to the terminals 4c, 4d. The electrode patterns 74a, 74b are formed by printing or vapor deposition.

When the DC motor for running 4 is mounted on the printed wiring board 74, the terminals 4c, 4d are electrically connected to the electrode patterns 74a, 74b, thereby supplying electricity to the DC motor for running 4.

The printed wiring board 74 may have a plate like shape, or may be curved to be concave upward. That is, it is only necessary that the printed wiring board 74 is formed to correspond to the shape of the motor case 4b and the terminals 4c, 4d certainly contact the electrode patterns 74a, 74b.

According to the running toy 100 having the above structure, since the printed wiring board 74 on which the electrode patterns 74a, 74b are formed is used, the assembly of the running toy 100 becomes extremely easy. That is, in the case of not using the printed wiring board 74, fine work such as assembling electrode plates (conductive plates) one by one on the vehicle body side, soldering of conducting wires for electrical connection or the like is needed. On the other hand, when using the printed wiring board 74 on which the electrode patterns 74a, 74b are formed, it is only necessary to assemble the printed wiring board 74 to the vehicle body when assembling the running toy 100, so that the assembly of the running toy 100 becomes extremely easy.

When electrically connecting the conducting wires in the case of using the conductive wires, there is a possibility to make a mistake in wiring, however, in this embodiment, there is no need to consider such mistake because the terminals are electrically connected only by contacting the electrode patterns 74a, 74b.

### (Running Mechanism)

The running mechanism 80 for transmitting the running torque of the DC motor for running 4 to the rear wheels 21R, 21R is provided in the mechanism storing room 71b. The running mechanism 80 comprises a gear mechanism 81 having the gear 81a.

That is, a shaft 82 parallel to the shaft 4a extends in the mechanism storing room 71b. As shown in FIG. 1, a gear 81b is provided on the shaft 82 to be freely rotatable with respect to the shaft 82. The gear 81b can move in the axis direction of the shaft 82. Gears 81Rc, 81Lc are integrally provided on the shaft 82 on the right and left sides of the gear 81b.

A shaft (rear wheel axle) 83 parallel to the shaft 82 extends in the mechanism storing room 71b. Gears 81Rd, 81Ld are fixed to the shaft 83. When the gear 81b moves in the axis direction of the shaft 82, the gears 81Rc, 81Lc alternately mesh the gears 81Rd, 81Ld corresponding to the moving direction of the shaft 82. Specifically, when the gear 81b moves to the left in the axis direction of the shaft 82, the gear 81Lc meshes the gear 81Ld, and when the gear 81b moves to the right in the axis direction of the shaft 82, the gear 81Rc meshes the gear 81Rd. By changing the meshing state of the gears, the running torque can be changed.

For moving the gear 81b in the axis direction of the shaft 82, a not shown operation control is attached on the lower side of the vehicle body 90. A lever 84 is moved to left or right by the operation of the operation control, so that the gear 81b between pawls 84a and 84b of the lever 84 is pushed to left or right to change the meshing state of the gears.

### (Cover)

As shown in FIG. 9, a cover 91 to cover the upper side of the motor storing room 71a and the mechanism storing room 71b is detachably attached to the vehicle body 90. The cover 91 functions as a motor holding member. Separate covers may be provided to separately cover the motor storing room 71a and the mechanism storing room 71b from the upper side.

The cover 91 is provided with a plurality of heat radiation openings 91a and a slit 93 to attach a radiation plate 92. The radiation plate 92 can be detached from the slit 93. For example, the radiation plate 92 is preferably made of metal such as copper or aluminum, however, it may be made of synthetic resin (for example, ABS resin) if selecting the shape with high radiation effect.

According to the running toy 100 having the above structure, the radiation plate 92 can be replaced easily, thereby enabling to easily change heat radiation performance. Moreover, the radiation plate 92 with different weights can be used depending upon the road surface condition. Further, the radiation plate 92 with different colors or shapes can be used according to mood. To effectively exert above various effects, it is preferable to prepare a plurality of radiator plates which are different in any of heat radiation property, weight, color and shape, and select a radiation plate among them to suit the need.

The number of the radiation plates 92 to be attached at the same time is not limited to one. The structure may be such that two or more radiation plates 92 can be attached to the cover 91.

### (Drive Circuit and Control Circuit)

The DC motor for running and the DC motor for steering are mounted on the running toy, and the rotation direction of each motor is changed by remote control, that is by sending radio waves from a remote control device.

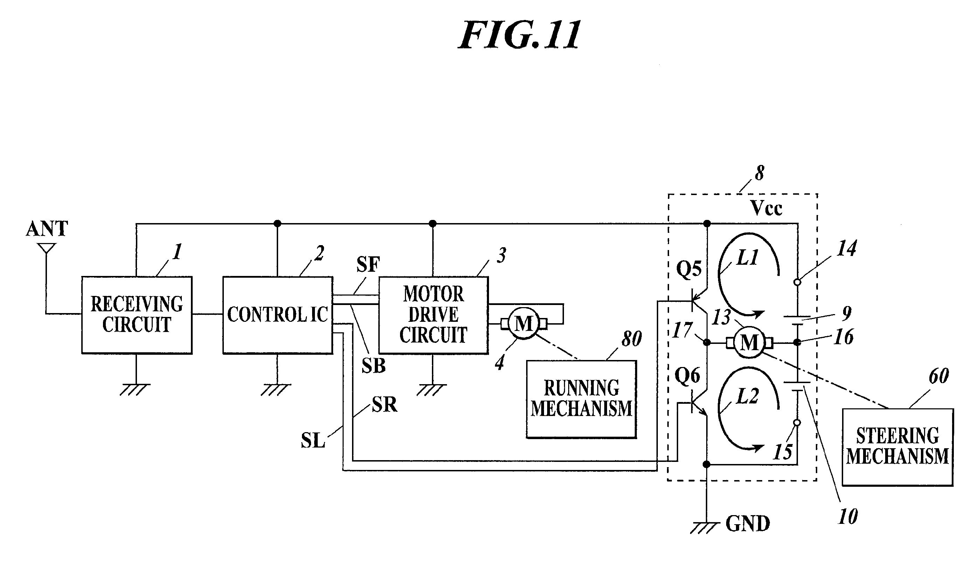

As shown in FIG. 11, a receiving circuit 1, a control IC 2, a running motor drive circuit 3 for driving the DC motor for running 4, and a steering motor drive circuit 8 for driving the DC motor for steering 13 are contained in the running toy.

An operation signal radio wave transmitted from the not shown remote control device is received by the receiving circuit 1 through the antenna and demodulated to be input to the control IC 2. The control IC 2 transmits a control instruction signal corresponding to the operation signal which was input to the control drive circuit of the running system and/or the steering system.

For example, when the operation signal is the forward movement instruction, the control IC 2 outputs the forward movement instruction signal SF to the running motor drive circuit 3. The running motor drive circuit 3 supplies voltage having a polarity corresponding to the forward movement direction to the DC motor for running 4. Similarly, when the operation signal is the backward movement instruction, the control IC 2 outputs the backward movement instruction signal SB to the running motor drive circuit 3. The running motor drive circuit 3 supplies voltage having a polarity corresponding to the backward movement direction to the DC motor for running 4.

When the operation signal is the steering control signal for the right turn instruction, the control IC 2 outputs the right turn instruction signal SR to the steering motor drive circuit 8. The steering motor drive circuit 8 supplies voltage having a polarity corresponding to the right turn direction to the steering motor drive circuit 8. Similarly, when the operation signal is the left turn instruction, the control IC 2 outputs the left turn instruction signal SL to the steering motor drive circuit 8. The steering motor drive circuit 8 supplies voltage having a polarity corresponding to the left turn direction to the DC motor for steering 13.

The steering motor drive circuit 8 comprises a positive power supply terminal 14 and a negative power supply terminal 15 between which at least two batteries 9, 10 can be connected in series.

A PNP transistor (first switching element) Q5 and a NPN transistor (second switching element) Q6 are connected in series between the positive power supply terminal 14 to supply power supply voltage Vcc and the negative power supply terminal 15 connected to the GND potential. The transistor Q5 and the transistor Q6 become conducting (ON) and nonconducting (OFF) alternately according to the left turn instruction signal SL and the right turn instruction signal SR from the control IC 2.

The DC motor for steering 13 is connected between a junction point 16 of the batteries 9, 10 and a junction point 17 of the transistor Q5 and the transistor Q6.

The rotary shaft of the DC motor for steering 13 is connected to the steering mechanism 60 connected to the steering wheels (front wheels). By changing the rotation direction of the DC motor for steering 13, the direction of the steering wheels can be changed through the steering mechanism 60.

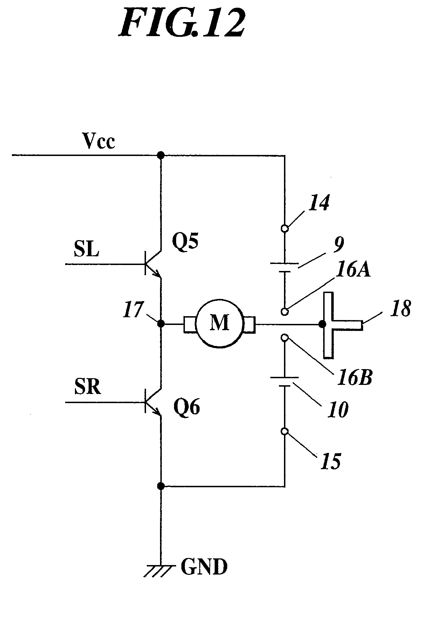

As shown in FIG. 12, a self-holding type power supply switch 18 is provided at the junction point of the batteries 9, 10. The power supply switch 18 is for electrically connecting a terminal on one side of the DC motor for steering 13, a negative side terminal 16A of the battery 9, and a positive side terminal 16B of the battery 10 when the power is on.

When the power supply switch 18 is on, the negative side of the battery 9 and the positive side of the battery 10 are electrically connected, and one terminal of the DC motor for steering 13 is connected to the power supply switch 18, so that the power supply voltage Vcc of the two series-connected batteries (for example, 1.5V×2=3V) is supplied to each circuit 1, 2, 3, 8, and a current path of an armature of the DC motor for steering 13 is formed.

Although the power supply voltage Vcc (for example, 3V) is applied between both ends of the steering motor drive circuit 8, the voltage applied to the DC motor for steering 13 in each rotation direction thereof is 1/2 of the power supply voltage Vcc (1.5V) because the battery to be used is different depending upon a loop L1 and a loop L2 to be described later.

### (Circuit Operation)

When the power supply switch 18 (FIG. 12) is on, the batteries 9, 10 are connected in series via the negative side terminal 16A and the positive side terminal 16B, and the DC motor for steering 13 is connected to the junction point 16 (FIG. 11) of the batteries 9, 10. At this time, two loops are formed in the steering motor drive circuit 8.

As shown in FIG. 11, one is the loop L1, that is, battery 9 ⇒ positive power supply terminal 14 ⇒ transistor Q5 ⇒ junction point 17 ⇒ DC motor for steering 13 ⇒ junction point 16 ⇒ battery 9.

Another one is the loop L2, that is, battery 10 ⇒ junction point 16 ⇒ DC motor for steering 13 ⇒ junction point 17 ⇒ transistor Q6 ⇒ negative power supply terminal 15 ⇒ battery 10.

Now, when the left turn instruction signal SL "potential L" is applied from the control IC 2, the transistor Q5 is on, the current flows in the path of the loop L1, and the DC motor for steering 13 rotates to left corresponding to the current direction thereof. On the other hand, when the right turn instruction signal SR "potential H" is applied from the control IC 2, the transistor Q6 is on, the current flows in the path of the loop L2 which is reverse direction in the case of the loop L1, and the DC motor for steering 13 rotates to right corresponding to the current direction thereof.

As above, the transistors Q5 and Q6 alternately perform ON/OFF operation in a complementary style. With the ON/OFF operation, the direction of the armature current flowing in the DC motor for steering 13 is revered to control the running direction of the running toy.

When running a plurality of the running toys 100 at the same time, the operating frequency to operate each running toy 100 is made different. In this case, it is needed to select and supply a remote controller which accords with each operating frequency of the running toy side. Therefore, to make the selection of a pair of the running toy 100 and the corresponding remote controller easy, it is preferable to change the color of the conductive wire for antenna depending upon the operating frequency.

The entire disclosure of Japanese Patent Application No. Tokugan 2004-299032 which was filed on October 13, 2004, including specification, claims, drawings and summary are incorporated herein by reference in its entirety.

## Claims

1. A running toy comprising:
a direct current motor for steering which is remote controlled; and
a steering arm to change a direction of a wheel, the steering arm being operated from side to side with respect to a vehicle body by a power of the direct current motor for steering,
wherein a rack tooth is formed on the steering arm, the direct current motor for steering is allowed to perform a normal rotation and a reverse rotation, and a pinion gear which meshes the rack tooth is attached to a shaft of the direct current motor for steering via a centrifugal clutch.

2. The running toy as claimed in claim 1,
wherein the wheel and the direct current motor for steering are provided at a position in front of a position of the steering arm in the vehicle body.

3. The running toy as claimed in claim 1 or 2,
wherein a spring to return the steering arm to a neutral position in a lateral direction of the vehicle body in a state where the direct current motor for steering is not operated, is provided.

4. The running toy as claimed in claim 1,
wherein the pinion gear is provided coaxial to the shaft, the centrifugal clutch is attached to the shaft, and when the centrifugal clutch is operated in a radial direction by a rotation of the direct current motor for steering, the centrifugal clutch is pressed on the pinion gear to rotate the pinion gear together with the shaft.
